# EUROPÄISCHE PATENTSCHRIFT

(11) **EP 1 160 207 B1**
(45) Veröffentlichungstag und Bekanntmachung des Hinweises auf die Patenterteilung: **07.09.2005**
(21) Anmeldenummer: 01113130.7
(22) Anmeldetag: 29.05.2001
(51) Int. Cl.: C02F 3/12

(54) **Reaktor und Verfahren für die Abwasserreinigung**
Reactor and process for wastewater treatment
Procédé et dispositif pour l'épuration des eaux-usées

(30) Priorität: 31.05.2000 DE 10026867
(43) Veröffentlichungstag der Anmeldung: 05.12.2001
(73) Patentinhaber: Mester, Thomas, Dipl.-Ing., 28205 Bremen (DE)
(72) Erfinder: Mester, Thomas, Dipl.-Ing., 28205 Bremen (DE)
(74) Vertreter: Läufer, Martina

(56) Entgegenhaltungen:
- FR-A- 2 417 475
- FR-A- 2 749 840
- US-A- 3 972 965
- PATENT ABSTRACTS OF JAPAN vol. 014, no. 306 (C-0735), 3. Juli 1990 (1990-07-03) & JP 02 102792 A (NITTO BOSEKI CO LTD;OTHERS: 01), 16. April 1990 (1990-04-16)

## Beschreibung

Die Erfindung betrifft einen Reaktor für den Einsatz in einer Kleinkläranlage sowie ein Verfahren für die Abwasserreinigung unter Verwendung dieses Reaktors sowie zusätzliche Verwendungen innerhalb bisher bereits bekannter Kleinkläranlagen insbesondere eine Mehrkammerkläranlage. Insbesondere betrifft die Erfindung einen Reaktor mit einem Gehäuse und einer darin angeordneten Fördereinrichtung zum Umwälzen, wie im Stand der Technik für in einer Kläranlage schwimmend oder hängend angeordnete Belüftungseinheiten bekannt und im Gebrauch (vgl. beispielsweise US 3972965).

Der Reaktor ist grundsätzlich ein belüfteter oder unbelüfteter Schlaufenreaktor, der in eine Klärgrube eingesetzt wird und dort für die biologische Reinigung des Abwassers sorgt. Kleinkläranlagen können als Zweikammergruben oder Mehrkammergruben ausgebildet sein. Bei Belebungsanlagen nach DIN 4261, Teil 2 (Kleinkläranlagen mit Abwasserbelüftung), d.h. bei Nutzung der Eigenschaften vorwiegend suspendierter, aerober Mikroorganismen, wobei in der ersten Kammer eine Vorreinigung erfolgt, ist eine Schlammrückführung aus dem Nachklärbecken durch eine Zwangsförderung oder unmittelbar vorgeschrieben, während bei Tropfkörper- oder Tauchkörperanlagen die Schlammrückführung nicht gefordert wird, da bei diesen Verfahren die sessilen Mikroorganismen genutzt werden. Kleinkläranlagen sollten besonders kostengünstig bezüglich der Anschaffungs- und Unterhaltungskosten sein.

Die Aufgabe der Erfindung besteht daher darin, ein Verfahren und einen zugehörigen Reaktor für die Abwasserreinigung zu entwickeln, welches in einem Schritt eine möglichst weitgehende Klärung ermöglicht, so dass Nachbehandlungsstufen an Bedeutung verlieren und einfache Klärgruben ausreichen.

Zur Lösung dieser Aufgabe wird ein Reaktor der eingangs genannten Art vorgesehen, bei welchem über der Fördereinrichtung ein bezüglich des umgebenden Wasserspiegels geneigtes Prall- und Ablaufblech angeordnet ist, welches senkrecht über der Austrittsöffnung der Fördereinrichtung wenigstens teilweise Durchtrittsöffnungen aufweist und welches von der Austrittsöffnung der Fördereinrichtung lotrecht über dieser wenigstens um einen Zehntel Durchmesser der Fördereinrichtung beabstandet ist.

Die neue Konstruktion vermeidet ein Verstopfen der Fördereinrichtung mit Trägermaterial, das beim Betrieb des Reaktors als Aufwuchsfläche für Mikroorganismen in diesem vorhanden ist. Das reibungslose Umwälzen des Reaktorinhalts einschließlich des Trägermaterials (z.B. Füllkörper) ist eine Grundvoraussetzung für eine wirksame Klärung bei Reaktoren dieses Typs.

Durch den erfindungsgemäßen Abstand des Prall- und Ablaufbleches über der Fördereinrichtung wird ein genügend großer Ablaufquerschnitt erzeugt, so dass der hydraulische Widerstand des Förderstroms durch das Ablaufblech gering bleibt.

Weiterhin kann der Förderstrom auf diese Weise hoch genug über den Wasserspiegel aufsteigen, so dass sich das seitlich abgelenkte und nach unten zurückströmende Abwasser auf den ganzen Querschnitt des Reaktors verteilt. Die Fördereinrichtung fördert beim Anspringen ein ausreichendes Volumen, um nach wenigen Sekunden das ruhende Füllkörperbett aufzubrechen und zu verwirbeln. Der abwärts gerichtete Förderstrom im äußeren Reaktionsraum beginnt anschließend, einen Teil der Füllkörperteilchen mit nach unten und im Steigrohr wieder nach oben zu reißen, so dass der gewünschte Kreislauf eintritt.

Vorzugsweise macht die Fläche der Durchtrittsöffnungen in dem Prall- und Ablaufbleich, die in der lotrechten Projektionsfläche der Austrittsöffnung der Fördereinrichtung auf das Prallblech liegen, zwischen 5 und 70 Prozent der Projektionsfläche aus. Bei Betrieb des Reaktors, der eine Kombination aus einem Wirbelbett- und einem Schlaufenreaktor ist, wird der im Reinigungsprozess befindliche Abwasserstrom gemeinsam mit den Füllkörpern im Inneren der Fördereinrichtung nach oben befördert und trifft nach Austritt aus der Fördereinrichtung auf das Prall- und Ablaufblech. Je nach Größe und Lage der Durchtrittsöffnungen wird nun ein bestimmter, vorzugsweise kleinerer Teil des Abwasserstroms durch die Öffnungen hindurchtreten, auf der Oberseite des Prall- und Ablaufbleches ablaufen und den Reaktor verlassen. Der restliche Teil des aufwärts auf das Prall- und Ablaufblech treffenden Abwasserstroms wird am Prallblech umgelenkt und im äußeren Gehäuseraum um die Fördereinrichtung herum nach unten geleitet, um im unteren Gehäuseraum wieder in die Fördereinrichtung einzutreten bzw. von dieser angesaugt zu werden.

Die Abstandsbemessung des Prall- und Ablaufblechs ist so zu verstehen, dass der tiefliegendste Punkt des über der Fördereinrichtung liegenden Teils des Bleches um wenigstens einen Zehntel Durchmesser der Fördereinrichtung von dieser beabstandet sein soll. Vorzugsweise kann der Abstand etwa zwischen einem Zehntel und zwei Durchmessern betragen, weiter vorzugsweise um 0,3 bis 2,0 Durchmesser der Fördereinrichtung.

Die Durchtrittsöffnungen in dem Prall- und Ablaufblech sollten kleiner als der Durchmesser der Füllkörper sein, damit diese aus dem Reaktor nicht ausgeschwemmt werden.

Die Fördereinrichtung ist in bevorzugter Ausführungsform ein Druckluftheber. Dieser besteht im wesentlichen aus einem Rohr, in welches von unten Druckluft eingeleitet wird.
Die Druckluft für den Druckluftheber kann in einer Leitung oder einem Schlauch außerhalb oder innerhalb des Gehäuses nach unten und dort in den Druckluftheber eingeleitet werden.
Die für den Betrieb des Drucklufthebers erforderliche Druckluft wird von einem separat aufgestellten Verdichter geliefert.

Die Druckluft wird vorzugsweise im unteren Bereich des Drucklufthebers über einen Stutzen zugeführt, der eine grob- bis mittelblasige Lufteinleitung bewirkt. Durch diese grobblasige Lufteinleitung wirkt der Druckluftheber in erster Linie als Umwälzsystem bei begrenztem Sauerstoffeintrag. Dies hat großen Einfluss auf die bei der Abwasserklärung ablaufenden mikrobiologischen Prozesse. Der grobblasige Lufteintrag ist daher für die Erfindung von großer Bedeutung; Einzelheiten hierzu werden im Zusammenhang mit dem Verfahren ausgeführt.

In alternativer Ausführungsform kann die Fördereinrichtung auch aus einem Steigrohr und wenigstens einem darin angeordnetem Propeller bestehen. Der Propeller muss so angeordnet sein, dass er eine Strömung innerhalb des Rohrs nach oben erzeugt. Der Propeller kann elektrisch angetrieben sein. Der Lufteintrg erfolgt in diesem Falle durch Verwirbelung des im Steigrohr nach oben gedrückten Abwassers mit der im Kopfraum des Reaktors befindlichen Luft. Der Kopfraum des Reaktors ist daher so auszubilden, dass ein Luftzutritt möglich ist.

In einer bevorzugten Ausführungsform liegt das Verhältnis der Querschnittsflächen der Fördereinrichtung zur Querschnittsfläche des Gehäuses zwischen 2/100 und 35/100.

Vorzugsweise umfassen Schwimmkörper ringförmig einen oberen Gehäuseteil des Reaktors. Durch richtige Dimensionierung dieses Schwimmrings, der aus mehreren Teilen zusammengesetzt sein kann, wird der in einer Klärgrube schwimmende Reaktor in einer für das Verfahren und die Umwälzung optimalen Position gehalten. Der Schwimmring wird dabei vorzugsweise so ausgewählt, dass der Wasserspiegel bei dem in die Klärgrube eingesetzten Reaktor oberhalb oder in Höhe der Oberkante der Fördereinrichtung zu liegen kommt.

Alternativ oder zusätzlich kann das Gehäuse des Reaktors Halterungen ausfweisen, so dass der Reaktor innerhalb der Kleinkläranlage in seiner Betriebsposition befestigt oder schwimmend in Position gehalten werden kann.

Etwa 70/100 bis 98/100 des Reaktors sollten sich bei Einsatz in der Kläranlage unterhalb des Wasserspiegels befinden.

Der einstellbare Teilstrom des Abwassers, der durch die Durchtrittsöffnungen des Prall- und Ablaufbleches tritt, verlässt den Reaktor durch wenigstens einen Ablauf oberhalb des Ablaufblechs, der vorzugsweise an oder über der Wasseroberfläche angeordnet ist. Für die Anpassung der Ablaufstrommenge an den jeweiligen Klärzweck, kann das Prall- und Ablaufblech auswechselbar in den Reaktor eingesetzt sein.

Der wenigstens eine Zulauf für den Reaktor kann unterhalb oder an der Wasseroberfläche angeordnet sein. Vorzugsweise befindet sich vor dem Zulauf ein Rechen.

Die Aufgabe der Erfindung wird weiterhin gelöst durch ein Verfahren für die Abwasserreinigung in einer Kleinkläranlage unter Verwendung des soeben beschriebenen Reaktors. Dieses Verfahren zeichnet sich dadurch aus, dass innerhalb des Reaktorgehäuses ein belüftetes Volumen gebildet wird, welches mit Hilfe einer Fördereinrichtung bewegt und umgewälzt wird, wobei sich in dem Volumen Füllkörper befinden, die Mikroorganismen als Bewuchsfläche dienen, dass die Funktion der Fördereinrichtung so eingestellt wird, dass die Füllkörper größtenteils in einer durch die Fördereinrichtung geleiteten Schlaufenströmung mitgerissen werden und dass aus der umlaufenden Schlaufenströmung ein geringer Teilstrom im wesentlichen in laminarer Strömung nach außen abgeführt wird.

Grundlage dieses biologischen Verfahrens zur Abwasserreinigung ist die Verwendung eines Reaktors aus einer Kombination aus einem Schlaufen- und einem Wirbelbettreaktor. Bei einem Wirbelbettreaktor handelt es sich allgemein um einen Reaktor mit losem Trägermaterial, wofür häufig Sand oder kleine Kunststoffpellets eingesetzt werden. Das Trägermaterial dient den Mikroorganismen als Bewuchsfläche. Hierdurch können die Mikroorganismen nicht aus dem System hydraulisch ausgespült werden. Auf diese Weise können sich auch Organismen mit einer langen Generationszeit entwickeln, wie z.B. Nitrifikanten und Organismen, die sich an das vorhandene Abwasser gut adaptiert haben, was wiederum eine bessere Reinigungsleistung mit sich bringt. Weiterhin wird eine hohe Biomassekonzentration im Reaktor erreicht, die nur noch von der Art und Menge des Trägermaterials abhängig ist, d.h. von der aktiven Oberfläche. Genutzt werden hier die Aufwuchsorganismen im Gegensatz zu den suspendierten Organismen beim Belebtschlammverfahren, das auch als Belebungsverfahren bezeichnet wird.

Das im Abwasser schwimmende Trägermaterial kann beispielsweise aus kleinen Kunststoffkörpern bestehen, die durch die Fördereinrichtung im Reaktor umgewälzt werden.

Wesentlich für die Erfindung ist, dass durch die Fördereinrichtung vergleichsweise wenig Sauerstoff eingetragen und die Nutzung solcher Mikroorganismen gefördert wird, die wahlweise aerob oder anaerob verstoffwechseln können (fakultativ anaerobe Mikroorganismen). Dies hat, wie im Weiteren noch ausgeführt wird, Auswirkungen auf die Klärleistung und die Sedimentbildung und bringt große Vorteile mit sich.

In einer ersten Ausführungsform wird der vergleichsweise geringe Luft-und damit Sauerstoffeintrag dadurch bewirkt, dass als Fördereinrichtung ein Druckluftheber eingesetzt wird, der mit grob- oder mittelblasig eingeleiteter Druckluft arbeitet. Die Druckluft dient dann weit überwiegend zum Umwälzen des belüfteten Volumens, der Sauerstoffeintrag bleibt begrenzt.

Die für den Betrieb des Drucklufthebers erforderliche Druckluft wird von einem Verdichter geliefert, der in bevorzugter Ausführung in einem separaten Schutzgehäuse montiert ist und neben der Klärgrube in einem Gebäude oder im Freien aufgestellt werden kann.

In einer weiteren Ausführungsform der Erfindung wird als Fördereinrichtung ein Steigrohr verwendet, dem wenigstens ein Propeller so zugeordnet ist, dass bei Antrieb des Propellers eine Abwasserströmung innerhalb des Steigrohrs nach oben erzeugt wird und dass Luft aus dem Kopfraum des Reaktors durch Verwirbelung oberhalb des Steigrohrs in die Schlaufenströmung eingetragen wird. Auch hierbei bleibt der Sauestoffeintrag so gering, dass ein paralleles Ablaufen aerober und anaerober Vorgänge in derselben Kläranlagenkammer möglich ist, wie nachfolgend noch genauer beschrieben.

Bei der Umwälzung des Abwassers und des schwimmenden Trägermaterials im Reaktorinneren wird ein Teil des Förderstroms durch die Durchtrittsöffnungen im Prall- und Ablaufblech gedrückt und so vom Reaktorinneren nach außen abgeleitet. Gleichzeitig strömt Abwasser über den Zulauf in den Reaktor nach.

Das Ableiten eines vergleichsweise geringen Teilstromes durch und über das Prall- und Ablaufblech ermöglicht ein ruhiges Ausströmen aus dem Reaktor, so dass der geklärte Teilstrom den Reaktor in einer im wesentlichen laminaren Strömung verlässt. Dies vermeidet unerwünschte Verwirbelungen in der Klärgrubenkammer, in die der Reaktor eingesetzt ist. Eine Sedimentation in dieser Kammer wird wenig gestört.

In bevorzugter Weiterbildung wird das Verfahren so geführt, dass die Funktion der Fördereinrichtung in Abstimmung auf die bauliche Auslegung des Reaktors so eingestellt ist, dass das aus dem Reaktor austretende Abwasser einen geringen oder keinen Sauerstoffüberschuss, vorzugsweise unter 1,0 mg/l O₂ , aufweist. Die Wasserströmung ist in der Kammer der Kleinkläranlage, in die der Reaktor eingesetzt ist, noch so gering, dass eine Sedimentation von Partikeln stattfindet und praktisch durch den Reaktor nicht gestört wird.

In Weiterbildung der Erfindung wird die Fördereinrichtung periodenweise ein- und ausgeschaltet. In der einfachsten Ausführungsform kann die Steuerung des Verdichters oder des Propellers über eine Zeitschaltuhr erfolgen. Durch das Ein- und Ausschalten können periodisch Sauerstoffüberschuss- und Sauerstoffmangelzustände herbeigeführt werden, die eine Kultur der potentiell aerob/anaeroben (oder auch fakultativ anaeroben) Mikroorganismen begünstigt.

Die Fördereinrichtung kann auch geregelt ein- und ausgeschaltet werden, wobei als Regelgröße vorzugsweise die Sauerstoffkonzentration in der unteren Reaktorhälfte dient.

Der Reaktor wird gemäß einem Ausführungsbeispiel in die zweite Kammer einer sogenannten Mehrkammerausfaulgrube nach DIN 4261 eingesetzt. Dabei dient die erste Kammer einer Vorklärung zur Abtrennung der Fest- und Schwimmstoffe; in der zweiten und dritten Kammer werden restliche Schlammflocken vor der Ableitung in einen Vorfluter abgetrennt (Nachreinigung). Über die Umwälzung im Reaktorinnenraum und in der zweiten Kammer werden den Mikroorganismen die gelösten organischen Stoffe (Substrate) als Nahrung zugeführt. Gleichzeitig werden Toträume in der zweiten Kammer mit dauerhaft anaeroben Zuständen (Faulprozesse) vermieden.

Von der bereits im Abwasser vorhandenen Biomasse werden die fakultativen und die aeroben Mikroorganismen genutzt. Die fakultativen Mikroorganismen kommen mit und ohne Sauerstoff aus, der Lebensbereich liegt um 0 mg/l O₂ in der wässrigen Phase. Die obligat aeroben Mikroorganismen benötigen einen Sauerstoffgehalt von 1 - 2 mg/l im Belebungsbecken, damit direkt an der Bakterienzelle der Belebtschlamm-Flocke die erforderlichen Mindestgehalte von 0,1 - 0,2 mg/l zur Verfügung stehen.

Der Eintrag des Luftsauerstoffes im Steigrohr des Drucklufthebers in das Abwassers ist wegen der groben Blasen nur begrenzt (grobblasige Belüftung). Ein weiterer Anteil Luftsauerstoff wird durch die mechanische Verwirbelung des Abwassers mit der Luft beim Aufprall unter dem Ablaufblech eingetragen, ähnlich den Vorgängen bei den aus der Abwassertechnik bekannten Mammutrotoren oder Kreiselbelüftern.

Die erzielte Reinigungsleistung (Abbau der gelösten organischen Inhaltsstoffe) wird durch beide Mikroorganismenarten erreicht, die in unterschiedlichem Ausmaß beteiligt sein können.

Durch das starke Verwirbeln des Förderstroms mit der Luft unter und neben dem Ablaufblech wird dort eine zusätzliche Menge Sauerstoff in das Abwasser eingetragen, so dass die aeroben Mikroorganismen bei Belüftung ihre volle Wirkung entfalten und wirksam Schmutzstoffe abbauen können. Die Abbauleistung durch die aeroben Mikroorganismen ist abhängig von der zur Verfügung stehenden, im Wasser gelösten Sauerstoffmenge. Für die fakultativ aeroben Mikroorganismen ist die Umwälzung und damit die Versorgung mit Nährstoffen der wesentliche Einflußfaktor. Die fakultativ aeroben Mikroorganismen entfalten daher ihre größte Wirkung während der Belüftungspausen. Durch die erfindungsgemäße Verfahrensführung wird daher das Potential beider Mikroorganismenarten optimal ausgenutzt.

Durch die verbesserte Klärwirkung ist auch eine Verwendung des erfindungsgemäßen Reaktors und eine Anwendung des erfindungsgemäßen Klärverfahrens in der zweiten Kammer einer Zweikammerklärgrube möglich. Eine zusätzliche Nachreinigung kann entfallen.

Der Volumenstrom des aus dem Reaktors herausgeleiteten Teilstroms des Drucklufthebers ist mengenmäßig soweit begrenzt, dass nur in unmittelbarer Nähe des Auslaufs Verwirbelungen entstehen und diese in ihrer Intensität minimal sind. In der 2. Kammer herrschen folglich bei dieser Anordnung wie in einem Nachklärbecken laminare Strömungen zwischen Zulauf aus der 1. Kammer, Zulauf in den und Ablauf aus dem Reaktor sowie Ablauf in die 3. Kammer. Die weitgehend laminaren Strömungsverhältnisse in der 2. Kammer bewirken ein Absinken der absetzbaren Schwebstoffe. Die 2. Kammer erfüllt also bereits die Funktion der Nachklärung in der gesamten Anordnung. Hierin liegt ein großer Unterschied zu den Nachrüstsätzen mit Belüftungstellern auf dem Boden der 2. Kammer, bei denen die Nachklärung erst in der 3. Kammer erfolgt. Hierbei ist es unwesentlich, ob mit den Belüftungstellern ein eingesetztes Festbett mit darauf angesiedelten sessilen Mikroorganismen (Festbettverfahren) oder frei schwimmende, in Flocken angehäufte Mikroorganismen (Belebtschlammverfahren oder Belebungsverfahren) mit Luftsauerstoff versorgt werden. Der Unterschied liegt in der Turbulenz in der 2. Kammer. Der eingesetzte, schwimmende Reaktor trennt ein Teilvolumen der 2. Kammer ab und nutzt nur dieses turbulente Volumen für die biologische Reinigung des Schmutzwassers. Außerhalb des Reaktors werden dagegen Turbulenzen vermieden.

Die 3. Kammer erfüllt zusätzlich zur 2. Kammer die Funktion der Nachklärung. Da ein großer Teil der absetzbaren Stoffe bereits in der 2. Kammer abgetrennt werden, ist der Schlammanfall in der 3. Kammer mit dem erfindungsgemäßen Reaktor wesentlich geringer als üblich.

Eine Verwendung des Reaktors ist daher in der 2. Kammer einer 2-Kammer-kläranlage, in der 2. oder 3. Kammer einer 3-Kammer-kläranlage und in der 2.,3.,4. Kammer einer 4-Kammerkläranlage möglich. Die Erfindung umfasst daher auch eine Mehrkammerkläranlage mit wenigstens 2 Kammern, bei der in der 2., 3. oder 4. Kammer ein Reaktor ,wie vorstehend beschrieben, angeordnet ist.

Bei dem vorgestellten Reaktor ist eine Schlammrückführung deshalb nicht erforderlich, da 1.) der größte Teil der anfallenden Überschuss-Biomasse bereits in der 2. Kammer sedimentiert und 2.) durch den Wechsel von aeroben und anaeroben Zuständen Überschuss-Biomasse auch in geringerer Menge anfällt.

Im folgenden wird die Erfindung anhand von Beispielen näher erläutert und veranschaulicht. In den Zeichnungen zeigen:
- Fig. 1: ein erstes Ausführungsbeispiel eines Reaktors im Längsschnitt;
- Fig. 2: den Reaktor aus Figur 1 in Draufsicht;
- Fig. 3: ein zweites Ausführungsbeispiel eines Reaktors im Längsschnitt;
- Fig. 4: eine 3-Kammerklärgrube mit in die zweite Kammer eingesetztem Reaktor in Draufsicht;
- Fig. 5: die 3-Kammerklärgrube aus Figur 3 im Längsschnitt;
- Fig. 6: eine 2-Kammerklärgrube mit eingesetztem Reaktor in Draufsicht.

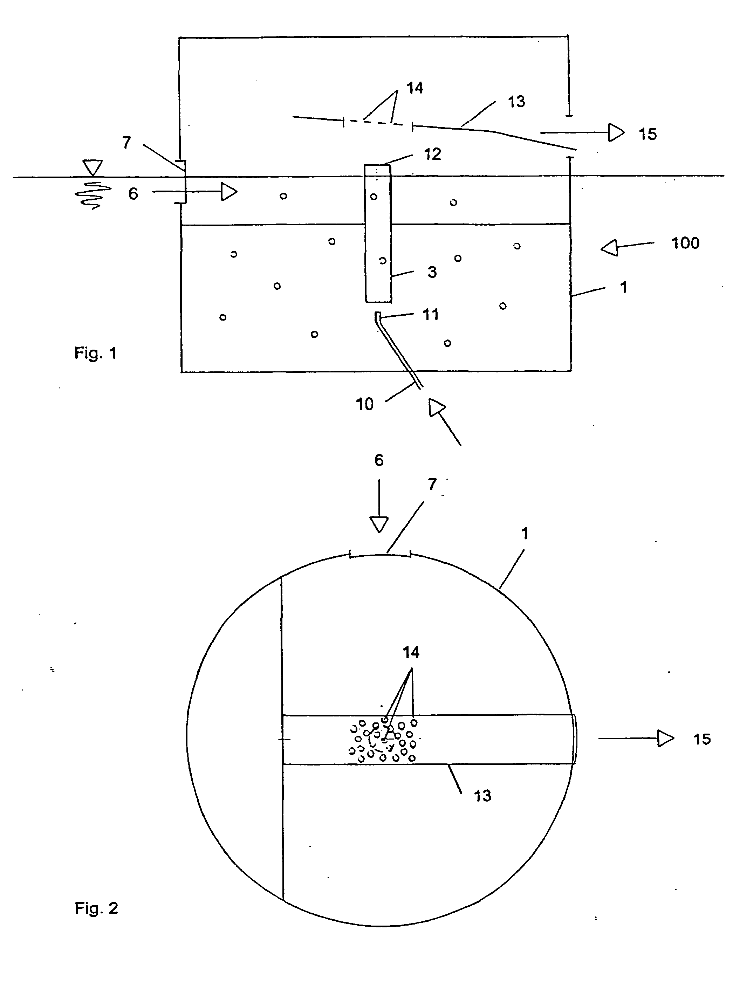

Fig. 1 zeigt ein Ausführungsbeispiel für einen erfindungsgemäßen Reaktor 100 mit einem Reaktorgehäuse 1 und einem in das Gehäuse ortsfest eingesetzten Druckluftheber 3. In das Reaktorgehäuse 1 führt ein Zulauf 6 hinein. Vor dem Zulauf befindet sich ein Rechen 7. Eine Druckluftleitung 10, die innerhalb oder außerhalb des Reaktorgehäuses geführt sein kann, mündet in einen Leitungsstutzen 11, durch den die Druckluft am unteren Ende des Drucklufthebers 3 grobblasig in den Reaktorinnenraum eintritt und zunächst innerhalb des Drucklufthebers 3 nach oben perlt. Dabei reißt die Druckluft die in der Zeichnung nur angedeuteten Füllkörper mit sich nach oben. Der Strom aus zu reinigendem Abwasser und Füllkörpern (die nach gewisser Betriebszeit mit Mikroorganismen bewachsen sind) verlässt den Druckluftheber 3 an dessen Austrittsöffnung 12 und strömt weiter nach oben bis er durch das Prall- und Ablaufblech 13 größtenteils umgelenkt wird und in einer Schlaufenströmung im äußeren Reaktorraum nach unten strömt. Am unteren Ende des Reaktors schließt sich der Kreislauf und das Abwasser wird in den Druckluftheber eingesaugt und mit der Druckluft wieder nach oben gerissen. Der Aufprall des Abwassers auf das Prall- und Ablaufblech bewirkt weiterhin, dass überschüssige Biomasse aus den mitgeförderten Kunststoffkörpern des Trägermaterials herausgespült wird. Eine Verstopfung des Trägermaterials wird so vermieden. Die überschüssige Biomasse setzt sich außerhalb des Reaktors in der Klärgrube ab.

Ein geringerer Teil des Abwassers wird mit Hilfe des nach oben drängenden Förderstroms aus dem Druckluftheber 3 durch Durchtrittsöffnungen 14 im Prall- und Ablaufblech 13 gedrückt und läuft auf der Oberseite des Ablaufblechs 13 seitlich ab. Das ablaufende Abwasser verlässt den Reaktor durch einen Ablauf 15. Die Stärke der Ablaufströmung kann über den Druck, mit dem die Druckluft zugeführt wird, einerseits und Größe und Zahl der Druchtrittsöffnungen 14 andererseits eingestellt werden. Nach einem Merkmal dieser Erfindung wird der Abwasseraustritt so eingestellt, dass das Abwasser den Reaktor in im wesentlichen laminarer Strömung verlässt.

In einer bevorzugten Verfahrensführung wird die Druckluftzufuhr mit einer Schaltuhr periodisch ein- und ausgeschaltet, beispielsweise ½ h EIN, ½ h AUS oder ¾ h EIN und ¼ h AUS. Das Trägermaterial ist von der Dichte so eingestellt, dass es gerade schwimmt und bei Belüftung oder mechanischer Umwälzung im Abwasser schwebt. Folglich schwimmt das Trägermaterial in den Belüftungspausen auf (γ < 1).

Figur 2 zeigt den gleichen Reaktor 100 in einer Draufsicht. Gleiche Bezugszeichen bezeichnen gleiche Bauteile.

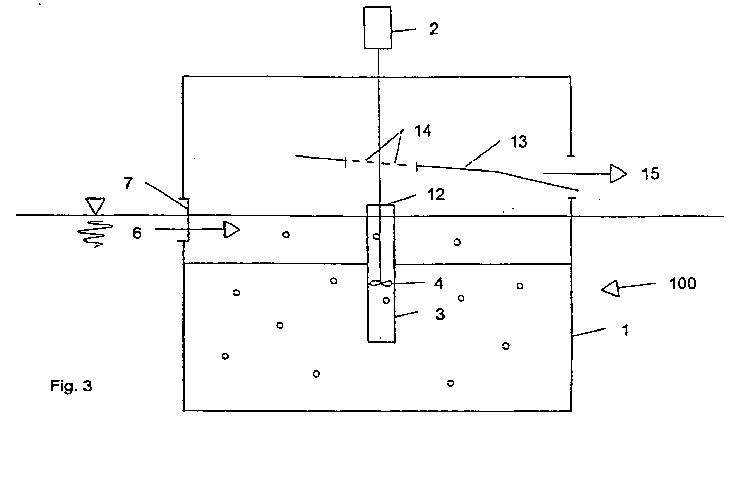

Figur 3 zeigt einen grundsätzlich Figur 1 entsprechenden Reaktor, wobei gleiche Bezugszeichen gleiche Bauteile kennzeichnet, jedoch ist hier die Fördereinrichtung in Form eines Steig- oder Leitrohres 3 mit darin angeordnetem Propeller 4 ausgebildet. Der Propeller 4 wird durch einen elektrischen Antrieb 2 betätigt und kann hierduch ebenso wie der Druckluftheber phasenweise ein- und ausgeschaltet werden. Nachdem das Abwasser durch den Zulauf 6 über den Rechen 7 in den Reaktor eingetreten ist, verteilt es sich gleichmäßig, so dass die Wasseroberfläche hier leicht unter der Austrittsöffnung 12 des Leitrohres 3 liegt. Bei Einschalten des elektrischen Antriebes 2 fördert der Propeller 4 das Abwasser innerhalb des Leitrohres 3 aufwärts, so dass eine konstante Aufwärtsströmung des Abwassers in dem Leitrohr eingestellt wird. Der Antrieb des Propellers soll so stark sein, dass das Abwasser deutlich über die Austrittsöffnung 12 hinaussteigt und unter dem Prall- und Ablaufblech 13 mit der Luft im Kopfraum des Reaktors verwirbelt wird. Ein Teil des Abwassers fällt unter dem Prallblech zurück in den Reaktorinnenraum außerhalb des Leitrohres 3 und wird dann unterhalb des Leitrohres durch die Sogwirkung des Propellers wieder nach oben eingesogen. Ein anderer, kleinerer Teil des Abwassers gelangt nach Austritt aus dem Leitrohr 3 durch die Durchtrittsöffnungen 14 des Prall-und Ablaufbleches 13 und läuft auf diesem durch den Ablauf 15 nach außen ab, wie dies entsprechend schon zu Figur 1 beschrieben wurde.

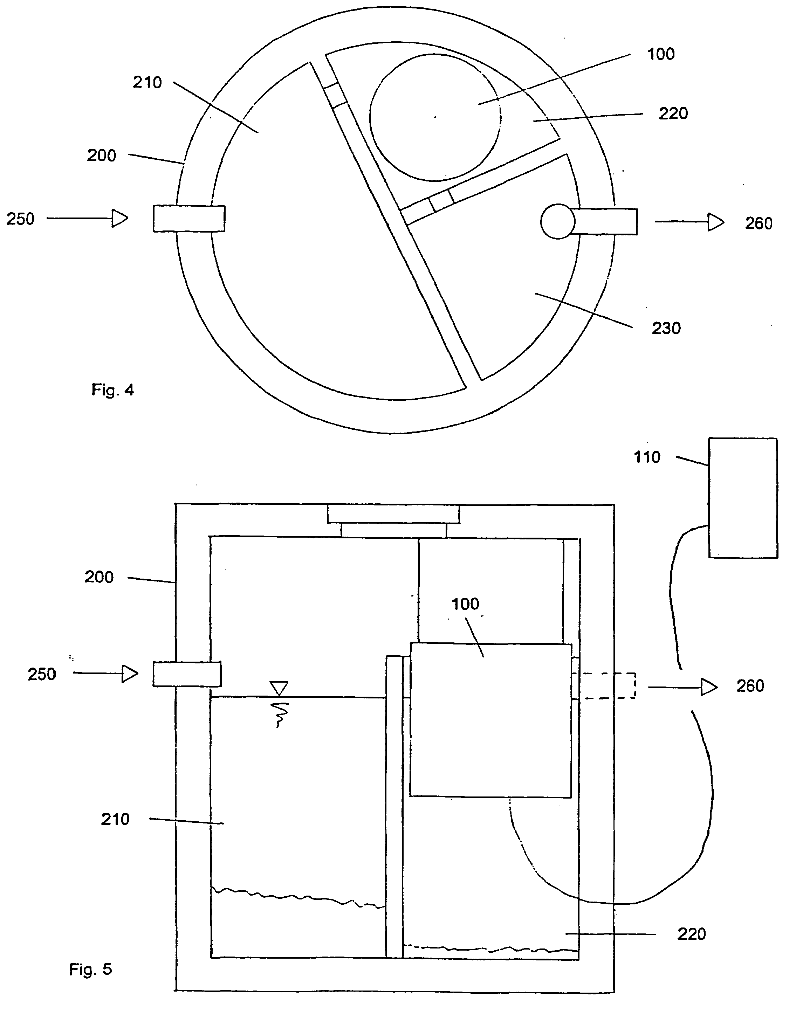

Figur 4 zeigt eine 3-Kammerklärgrube in Draufsicht. Die Klärgrube 200 besteht aus einer ersten Kammer oder Vorklärung 210, einer zweiten Kammer 220 und einer dritten Kammer 230. Das Abwasser tritt durch einen Zulauf 250 (DN 150) in die erste Kammer 210 ein, gelangt von dort in die zweite Kammer 220, in der der Reaktor 100 angeordnet ist, läuft in die dritte Kammer 230 und verlässt von dort die Klärgrube durch einen Ablauf 260 (DN 150) in Richtung eines Vorfluters, eines Sickerschachts oder einer Verrieselung.

Dieselbe Klärgrube 200 ist in Figur 5 in einem Längsschnitt dargestellt. Man erkennt hier die hängende Anordnung des Reaktors 100, der von einem neben der Grube 200 befindlichen Verdichter 110 mit Druckluft versorgt wird. In der ersten Kammer 210 werden Fest-und Schwimmstoffe zurückgelassen. In der zweiten Kammer 220 setzt sich durch die Wirkung des darin eingesetzten Reaktors 100 nur noch vergleichsweise wenig Sediment ab; das darüberstehende Abwasser, das durch den Reaktor nicht stark bewegt wird, ist nach Einstellung eines stationären Zustands bereits weitgehend geklärt. Man erkennt, dass der belüftete Reaktor 100 im oberen Bereich der zweiten Kammer 220 hängt. Die durch den Verdichter 110 eingetragene Luft erzeugt primär eine (vergleichsweise) stark belüftete Zone innerhalb des Reaktors 100. Die eingetragene Luft sorgt jedoch auch mit für eine Belüftung des Kopfraumes in der Kleinkläranlage oberhalb des Abwasserspiegels. Der weitaus größte Teil des Wasserkörpers in der Kammer wird nicht künstlich belüftet und erhält Sauerstoff nur über den Auslauf aus dem Reaktor während der Belüftungsphasen und über die Wasseroberfläche.

Die Belüftung, d.h. die Zufuhr von Druckluft aus dem Verdichter 110, kann phasenweise erfolgen und wird beispielsweise über eine Zeitschaltuhr gesteuert.

Auf dem Boden der zweiten Kammer 220 bildet sich eine Sedimentschicht aus eingetragenen Feststoffen und sedimentierten Mikroorganismen. Die Wasserströmung in der zweiten Kammer während der Belüftungsphasen im Reaktor ist so gering, dass eine Sedimentation von Partikeln stattfindet. Es bilden sich durch diese Vorgänge somit folgende Zonen aus:
1. Belüftete Zone (Reaktorinnenraum):
   Diese Zone wird während der Belüftungszeiten mit Sauerstoff versorgt und enthält auf dem Trägermaterial aufgewachsene Bakterien. Hier sind während der Belüftungsphasen vorwiegend aerobe Bedingungen vorhanden. Während der Belüftungspausen kann der Sauerstoff je nach Belastungszustand der Kläranlage auch vollständig aufgezehrt werden, was die fakultativ anaeroben Mikroorganismen begünstigt.
2. Unbelüftete Zone (Abwasser ausserhalb des Reaktors in der zweiten Kammer):
   Diese Zone erhält Sauerstoff nur im oberen Bereich um den Reaktor während der Belüftung und über die Wasseroberfläche durch Diffusion. Nur bei geringer Belastung der Kläranlage z.B. während der Nachtstunden oder längerer Abwesenheit der Nutzer wird in dieser Zone eine weitgehende Sauerstoffversorgung stattfinden. In der übrigen Zeit ist hier mit einer sehr geringen Sauerstoffkonzentration oder auch mit anaeroben Verhältnissen zu rechnen.
3. Sediment:
   In der Sedimentschicht werden durch den Abbau des organischen Materials ständig anaerobe Verhältnisse herrschen. Lediglich in die oberste Schicht kann eventuell Sauerstoff oder Nitrat aus der unbelüfteten Zone hineindiffundieren, die jedoch voraussichtlich schnell abgebaut werden.

Sowohl in der belüfteten als auch in der unbelüfteten Zone treten in unterschiedlicher Ausprägung phasenweise aerobe und anaerobe Verhältnisse auf. Solche Bedingungen bieten für fakultativ aerobe Mikroorganismen günstige Lebensbedingungen Diese Mikroorganismen führen bei ausreichender Sauerstoffversorgung einen aeroben Stoffwechsel durch, während sie bei Sauerstoffmangel ihren Stoffwechsel auf Gärungsprozesse umstellen können. Dadurch sind sie in der Lage, gerade unter wechselnden Bedingungen zu überleben und zu wachsen.

Der aerobe Stoffwechsel wird von den Mikroorganismen bevorzugt, da sie durch die Nutzung des Sauerstoffes mehr Energie aus den abgebauten organischen Stoffen gewinnen können und so schneller wachsen. Bei der aeroben Umsetzung der organischen Stoffe werden diese Stoffe weitgehend dem Wasser entzogen und im wesentlichen zu Kohlendioxid und Wasser umgesetzt. Das gute Wachstum führt zur Bildung von Überschuss-Biomasse.

Nutzen die Mikroorganismen einen Gärungsstoffwechsel, findet ein langsameres Wachstum und damit eine geringere Bildung von Überschuss-Biomasse statt. Die organischen Stoffe werden aber nur zum Teil zu Kohlendioxid und Wasser umgesetzt, da die Bakterien Gärungsprodukte wie z.B. organische Säuren ausschleusen. Diese Gärungsprodukte sind wiederum in der Regel sehr leicht aerob in der belüfteten Zone abbaubar.

Die Kombination von aerobem Stoffwechsel und Gärungsstoffwechsel wird also zu einer geringeren Bildung von Überschussbiomasse führen als der alleinige aerobe Abbau der organischen Stoffe. Ist die Sauerstoffversorgung ausreichend bemessen, können die Gärungsprodukte soweit abgebaut werden, dass die zulässigen Ablaufwerte der Anlage sicher eingehalten werden.

Wegen der geringen Durchströmung der Kammer sedimentieren Feststoffe wie z.B. Bakterienflocken am Boden der Kammer und bilden eine Sedimentschicht. Lediglich die auf den Partikeln des Wirbelbettes fixierten Bakterien sedimentieren nicht und stehen dafür ständig für die Reinigung des Abwassers zur Verfügung, auch nach Belüftungspausen oder Betriebsunterbrechungen.

In der Sedimentschicht findet ein anaerober Abbau der organischen Stoffe und damit eine Stabilisierung und Mengenreduzierung der Feststoffe statt. Falls durch Gasbildung in der Sedimentschicht (Denitrifikationsvorgänge) Teile des Sedimentes aufschwimmen, werden diese Teile im oberen Bereich der zweiten Kammer im Bereich der Ausströmung des Reaktors zerteilt und sinken wieder auf den Boden, so dass nicht mit Schwimmschlamm zu rechnen ist.

Der anaerobe Abbau des Sedimentes ist ein weiterer Grund, warum insgesamt mit einem geringen Anfall an zu entsorgendem Feststoff zu rechnen ist, der dann bei Bedarf oder in regelmäßigen Intervallen durch Absaugen entfernt werden muss.

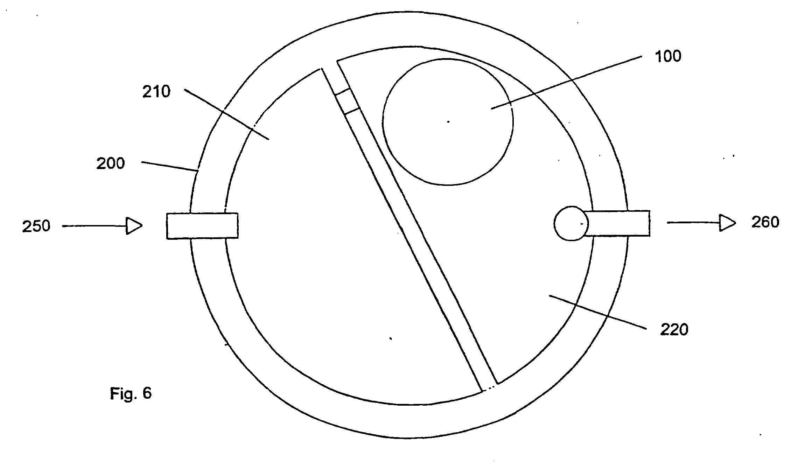

Auf Grund der vorstehend dargelegten Verhältnisse kann auf eine dritte Kammer ganz verzichtet werden, wie dies in Figur 6 gezeigt ist.

Figur 6 zeigt eine 2-Kammerklärgrube wie sie bei einem Klärverfahren mit dem erfindungsgemäßem Reaktor verwendet werden könnte. Die Größenverhältnisse der Kammern sind nicht maßstabsgerecht, jedoch sollte die erste Kammer 210 größer als die zweite Kammer 220 sein.

Für die Umrüstung oder den Neubau einer Kleinkläranlage (Mehrkammerausfaulgrube) ergeben sich durch den erfindungsgemäßen Reaktor beispielsweise die folgenden Möglichkeiten:
a) Bei der Nachrüstung einer vorhandenen Mehrkammerausfaulgrube mit 3 Kammern nach DIN 4261 und einem gegebenen Gesamtvolumen von z.B. 6,0 m³ wird (zur Vermeidung von Umbaukosten) die bauliche Anordnung nicht verändert, d.h. alle 3 Kammern werden beibehalten (Volumina 50% + 25% + 25% = 3,0 + 1,5 + 1,5 m³).
b) Bei einem Neubau einer Kleinkläranlage ist es als Variante 1 denkbar, das Gesamtvolumen von z.B. 6,0 m³ auf nur 2 Kammern aufzuteilen mit dem Vorteil, dass jede der 2 Kammern ein größeres Volumen aufweist (Volumina 4,0 + 2,0 m³). Durch die Vergrößerung des Volumens der 1. Kammer verlängert sich der Abfuhrturnus für den Fäkalschlamm, da in der 1. Kammer der größte Teil des Fäkalschlamms gespeichert wird. Hieraus ergibt sich eine entsprechende Kostenersparnis (Fahrtkostenanteil).
c) Bei Neubau Variante 2 kann das Gesamtvolumen reduziert werden auf z.B. 3,0 + 1,5 = 4,5 m³. Bei dieser Variante ergeben sich Kosteneinsparungen durch den geringeren Aufwand für das Betonfertigteil und die Erdarbeiten. Die Abfuhrkosten für den Fäkalschlamm bleiben etwa wie bei Lösung a). Es werden geringfügig weniger Feststoffe abgetrennt, da die 2. Nachklärung entfällt.

### Bezugszeichenliste:

- 1: Reaktorgehäuse
- 2: Propellerantrieb
- 3: Fördereinrichtung: Druckluftheber oder Leitrohr/Steigrohr
- 4: Propeller
- 6: Zulauf
- 7: Rechen

- 10: Druckluftleitung
- 11: Leitungsstutzen
- 12: Druckluftheber-Austrittsöffnung
- 13: Prall- und Ablaufblech
- 14: Durchtrittsöffnung
- 15: Ablauf

- 100: Reaktor
- 110: Verdichter

- 200: Klärgrube (Mehrkammerausfaulgrube)
- 210: erste Kammer (Vorklärung)
- 220: zweite Kammer
- 230: dritte Kammer
- 250: Zulauf
- 260: Ablauf

## Patentansprüche

1. Reaktor (100) für den Einsatz in einer Kleinkläranlage mit einem Gehäuse (1)und einer darin angeordneten Fördereinrichtung (3), **dadurch gekennzeichnet, dass** über derFördereinrichtung (3) ein bezüglich des umgebenden Wasserspiegels geneigtes Prall- und Ablaufblech (13) angeordnet ist, welches senkrecht über der Austrittsöffnung (12) der Fördereinrichtung (3) wenigstens teilweise Durchtrittsöffnungen (14) aufweist und welches von der Austrittsöffnung (12) der Fördereinrichtung (3) lotrecht über dieser wenigstens um einen Zehntel Durchmesser der Fördereinrichtung beabstandet ist.

2. Reaktor nach Anspruch 1, **dadurch gekennzeichnet, dass** das Prall- und Ablaufblech (13) von der Austrittsöffnung (12) der Fördereinrichtung (3) lotrecht über dieser um etwa einen Zehntel bis etwa zwei, vorzugsweise um 0,3 bis 2,0 Durchmesser der Fördereinrichtung beabstandet ist.

3. Reaktor nach Anspruch 1 oder 2, **dadurch gekennzeichnet, dass** die Fläche der Durchtrittsöffnungen (14) in dem Prall-und Ablaufblech (13), die in der lotrechten Projektionsfläche der Austrittsöffnung (12) der Fördereinrichtung auf das Prallblech (13) liegen, zwischen 5 und 70% der Projektionsfläche ausmachen.

4. Reaktor nach einem der Ansprüche 1 bis 3, **dadurch gekennzeichnet, dass** die Fördereinrichtung (3) ein Druckluftheber ist in dessen unterem Bereich ein Leitungsstutzen (11) für eine grob- bis mittelblasige Lufteinleitung angeordnet ist.

5. Reaktor nach einem der Ansprüche 1 bis 3, **dadurch gekennzeichnet, dass** die Fördereinrichtung (3) ein Leitrohr und einen darin angeordneten, elektrisch angetriebenen Propeller (4) umfasst.

6. Reaktor nach einem der Ansprüche 1 bis 5, **dadurch gekennzeichnet, dass** das Verhältnis der Querschnittsfläche der Fördereinrichtung (3) zur Querschnittsfläche des Gehäuses (1) zwischen 0,02 und 0,35 beträgt.

7. Reaktor nach einem der Ansprüche 1 bis 6, **dadurch gekennzeichnet, dass** ein oder mehrere Schwimmkörper (4) ringförmig einen oberen Gehäuseteil umfasst/umfassen.

8. Reaktor nach Anspruch 7, **dadurch gekennzeichnet, dass** die Dimensionierung des Schwimmkörpers oder der Schwimmkörper (4) so gewählt ist, dass etwa 70/100 bis 98/100 des Reaktors (100) sich bei Einsatz in der Kleinkläranlage (200) unterhalb des Wasserspiegels befindet.

9. Reaktor nach einem der Ansprüche 1 bis 6, **dadurch gekennzeichnet, dass** das Gehäuse (1) Halterungen aufweist, mittels derer es in der Betriebsposition befestigt werden kann.

10. Reaktor nach einem der Ansprüche 1 bis 9, **dadurch gekennzeichnet, dass** wenigstens ein Ablauf (15) oberhalb des Prall-und Ablaufblechs (13) an oder über der Wasseroberfläche im Reaktor angeordnet ist.

11. Reaktor nach einem der Ansprüche 1 bis 10, **dadurch gekennzeichnet, dass** wenigstens ein Zulauf (6) unterhalb oder an der Wasseroberfläche der Kleinkläranlage angeordnet ist.

12. Reaktor nach Anspruch 11, **dadurch gekennzeichnet, dass** sich vor dem Zulauf (6) ein Rechen (7) befindet.

13. Verfahren für die Abwasserreinigung in einer Kleinkläranlage unter Verwendung eines Reaktors nach einem der Ansprüche 1 bis 12,
**dadurch gekennzeichnet,**
- **dass** innerhalb des Reaktorgehäuses ein belüftetes Volumen gebildet wird, welches mit Hilfe einer Fördereinrichtung unter geringem Lufteintrag bewegt und umgewälzt wird,
- **dass** sich in dem Volumen Füllkörper befinden,
- **dass** die Funktion der Fördereinrichtung so eingestellt wird, dass die Füllkörper größtenteils in einer durch die Fördereinrichtung geleiteten Schlaufenströmung mitgerissen werden
- und **dass** aus der umlaufenden Schlaufenströmung ein geringer Teilstrom im wesentlichen in laminarer Strömung nach außen abgeführt wird.

14. Verfahren nach Anspruch 13, **dadurch gekennzeichnet, dass** als Fördereinrichtung ein Druckluftheber eingesetzt wird, der mit grob- oder mittelblasig eingeleiteter Druckluft arbeitet.

15. Verfahren nach Anspruch 13, **dadurch gekennzeichnet, dass** als Fördereinrichtung ein Steigrohr mit wenigstens einem Propeller verwendet wird, wobei der Propeller in Zuordnung zu dem Steigrohr so angeordnet ist, dass bei Antrieb des Propellers eine Abwasserströmung innerhalb des Steigrohrs nach oben erzeugt wird und dass Luft aus dem Kopfraum des Reaktors durch Verwirbelung oberhalb des Steigrohres in die Schlaufenströmung eingetragen wird.

16. Verfahren nach einem der Ansprüche 13 bis 15 **dadurch gekennzeichnet, dass** die Funktion der Fördereinrichtung periodenweise ein- und ausgeschaltet wird.

17. Verfahren nach Anspruch 16, **dadurch gekennzeichnet, dass** die Funktion der Fördereinrichtung geregelt ein- und ausgeschaltet wird, wobei als Regelgröße vorzugsweise die Sauerstoffkonzentration an einer Position im unteren Bereich des Reaktors dient.

18. Verfahren nach einem der Ansprüche 13 bis 17, **dadurch gekennzeichnet, dass** die Funktion der Fördereinrichtung in Abstimmung auf die bauliche Auslegung des Reaktors so eingestellt wird, dass das aus dem Reaktor austretende Abwasser einen geringen oder keinen Sauerstoffüberschuss, vorzugsweise unter 1,0 mg/l O₂ , aufweist.

19. Verfahren nach einem der Ansprüche 13 bis 18, **dadurch gekennzeichnet, dass** die Funktion der Fördereinrichtung so eingestellt wird, dass die Wasserströmung in der Kammer der Kleinkläranlage, in die der Reaktor eingesetzt ist, so gering ist, dass eine Sedimentation von Partikeln in dieser Kammer stattfindet.

20. Mehrkammerkläranlage mit wenigstens zwei Kammern, **dadurch gekennzeichnet, dass** in der zweiten, dritten oder vierten Kammer ein Reaktor nach einem der Ansprüche 1 bis 12 angeordnet ist.

## Claims

1. A reactor (100) for use in a small waste-water treatment plant comprising a housing (1) and a conveying device (3) arranged therein, **characterised in that** a baffle plate and discharge chute (13) inclined with respect to the surrounding water level is arranged above the conveying device (3), which has openings (14) at least in parts perpendicularly above the outlet opening (12) of the conveying device (3) and which is at a distance of at least a tenth of the diameter of the conveying device from the outlet opening (12) of the conveying device (3) perpendicularly above said device.

2. The reactor according to claim 1, **characterised in that** the baffle plate and discharge chute (13) is at a distance of at least a tenth to about twice, preferably 0.3 to 2.0 times the diameter of the conveying device from the outlet opening (12) of the conveying device (3) perpendicularly above said device.

3. The reactor according to claim 1 or claim 2, **characterised in that** the area of the openings (14) in the baffle plate and discharge chute (13) which lie in the perpendicular surface of projection of the outlet opening (12) of the conveying device on the baffle plate (13) account for between 5 and 70 % of the surface of projection.

4. The reactor according to any one of claims 1 to 3, **characterised in that** the conveying device (3) is an air lift which has a pipe connection (11) for a coarse- to medium-bubble air line arranged in its lower area.

5. The reactor according to any one of claims 1 to 3, **characterised in that** the conveying device (3) comprises a conduit tube and an electrically driven propeller (4) arranged therein.

6. The reactor according to any one of claims 1 to 5, **characterised in that** the ratio of the cross-sectional area of the conveying device (3) to the cross-sectional area of the housing (1) is between 0.02 and 0.35.

7. The reactor according to any one of claims 1 to 6, **characterised in that** one or a plurality of floats (4) embraces/embrace an upper housing section in a ring shape.

8. The reactor according to claim 7, **characterised in that** the dimensioning of the float or the floats (4) is selected so that about 70/100 to 98/100 of the reactor (100) is located below the water level when used in the small waste-water treatment plant (200).

9. The reactor according to any one of claims 1 to 6, **characterised in that** the housing (1) has holders by which means it can be fixed in the operating position.

10. The reactor according to any one of claims 1 to 9, **characterised in that** at least one drain (15) is arranged above the baffle plate and discharge chute (13) at or above the water surface in the reactor.

11. The reactor according to any one of claims 1 to 10, **characterised in that** at least one intake (6) is arranged below or at the water surface of the small waste-water treatment plant.

12. The reactor according to claim 11, **characterised in that** a rake (7) is located before the intake (6).

13. A method for waste water purification in a small waste-water treatment plant using a reactor according to any one of claims 1 to 12,
**characterised in**
- **that** an aerated volume is formed inside the reactor housing which is moved using a conveying device with low air intake and is circulated,
- **that** fillers are located in the volume,
- **that** the function of the conveying device is adjusted so that the fillers are mostly entrained in a loop flow guided through the conveying device
- and **that** from the circulating loop flow a small partial flow is removed to the outside in substantially laminar flow.

14. The method according to claim 13, **characterised in that** an air lift which operates with coarse- or medium-bubble in-taken compressed air is used as the conveying device.

15. The method according to claim 13, **characterised in that** a riser with at least one propeller is used as the conveying device, wherein the propeller is arranged in association with the riser so that when the propeller is driven, an upward flow of waste water is generated inside the riser and that air from the head space of the reactor is taken into the loop flow by turbulence above the riser.

16. The method according to any one of claims 13 to 15, **characterised in that** the function of the conveying device is periodically switched on and off.

17. The method according to claim 16, **characterised in that** the function of the conveying device is switched on and off in a regulated fashion, wherein the oxygen concentration at a position in the lower area of the reactor is preferably used as the regulating quantity.

18. The method according to any one of claims 13 to 17, **characterised in that** the function of the conveying device is adjusted to match the structural design of the reactor so that the waste water emerging from the reactor has a low or no oxygen excess, preferably below 1.0 mg/l O₂.

19. The method according to any one of claims 13 to 18, **characterised in that** the function of the conveying device is adjusted so that the water flow in the chamber of the small waste-water treatment plant into which the reactor is inserted is so low that sedimentation of particles takes place in this chamber.

20. A multiple-chamber waste-water treatment plant comprising at least two chambers, **characterised in that** a reactor according to any one of claims 1 to 12 is arranged in the second, third or fourth chamber.

## Revendications

1. Réacteur (100) destiné à un usage dans une petite station d'épuration, comprenant une enceinte (1) et un dispositif de transport (3) disposé dedans, **caractérisé en ce qu'**au dessus du dispositif de transport (3), est disposée une plaque de déflection et d'évacuation (13) inclinée par rapport au niveau d'eau environnant, qui présente au moins partiellement des orifices de passage pratiqués verticalement au dessus de l'orifice de sortie (12) du dispositif de transport (3) et qui est espacée de l'orifice de sortie (12) du dispositif de transport (3) perpendiculairement au dessus de celui-ci à raison d'au moins un dixième du diamètre du dispositif de transport.

2. Réacteur selon la revendication 1, **caractérisé en ce que** la plaque de déflection et d'évacuation (13) est espacée de l'orifice de sortie (12) du dispositif de transport (3) perpendiculairement au dessus de celui-ci à raison d'environ un dixième à environ deux fois, de préférence 0,3 à 2,0 fois, le diamètre du dispositif de transport.

3. Réacteur selon la revendication 1 ou 2, **caractérisé en ce que** la surface des orifices de passage (14) pratiqués dans la plaque de déflection et d'évacuation (13) et qui se trouvent dans la surface de projection perpendiculaire de l'orifice de sortie (12) du dispositif de transport sur la plaque de déflection (3) représente 5 à 70 % de la surface de projection.

4. Réacteur selon une des revendications 1 à 3, **caractérisé en ce que** le dispositif de transport (3) est un siphon à air comprimé, dans la partie inférieure duquel est disposée une tubulure conductrice (11) pour l'introduction d'air en grosses ou moyennes bulles.

5. Réacteur selon une des revendications 1 à 3, **caractérisé en ce que** le dispositif de transport (3) comprend un tuyau conducteur et une hélice (4) entraînée à l'électricité placée dedans.

6. Réacteur selon une des revendications 1 à 5, **caractérisé en ce que** le rapport entre la surface de section transversale du dispositif de transport (3) et la surface de section transversale de l'enceinte (1) va de 0,02 à 0,35.

7. Réacteur selon une des revendications 1 à 6, **caractérisé en ce qu'**un ou plusieurs flotteurs (4) comprend/comprennent une partie de boîtier supérieure en forme d'anneau.

8. Réacteur selon la revendication 7, **caractérisé en ce que** le dimensionnement du flotteur ou des flotteurs (4) est choisi de manière à ce qu'environ 70/100 à 98/100 du réacteur (100) se trouve en dessous du niveau de l'eau pendant son usage dans la petite station d'épuration (200).

9. Réacteur selon une des revendications 1 à 6, **caractérisé en ce que** l'enceinte (1) présente des supports qui permettent de la fixer en position de fonctionnement.

10. Réacteur selon une des revendications 1 à 9, **caractérisé en ce qu'**au moins une évacuation (15) est disposée dans le réacteur au dessus de la plaque de déflection et d'évacuation (13) au niveau ou au dessus de la surface de l'eau.

11. Réacteur selon une des revendications 1 à 10, **caractérisé en ce qu'**au moins une arrivée (6) est disposée en dessous ou au niveau de la surface de l'eau de la petite station d'épuration.

12. Réacteur selon la revendication 11, **caractérisé en ce qu'**avant l'arrivée (6) se trouve une grille (7).

13. Procédé d'épuration d'eau usée dans une petite station d'épuration en utilisant un réacteur selon une des revendications 1 à 12,
**caractérisé en ce que**
- à l'intérieur de l'enceinte du réacteur, on constitue un volume ventilé qui est déplacé et recyclé à l'aide d'un dispositif de transport avec un faible apport d'air,
- des corps de remplissage se trouvent dans ce volume,
- le fonctionnement du dispositif de transport est réglé de manière à ce que les corps de remplissage soient entraînés en majeure partie dans un flux en boucle dirigé par le dispositif de transport
- et qu'un faible flux partiel est évacué vers l'extérieur sensiblement en écoulement laminaire depuis le flux en boucle tournant.

14. Procédé selon la revendication 13, **caractérisé en ce qu'**on utilise comme dispositif de transport un siphon à air comprimé qui fonctionne à l'aide d'air comprimé introduit en grosses ou moyennes bulles.

15. Procédé selon la revendication 13, **caractérisé en ce qu'**on utilise comme dispositif de transport un tuyau ascendant comprenant au moins une hélice, l'hélice étant disposée associée au tuyau ascendant de telle manière que, lors de l'actionnement de l'hélice, un écoulement d'eau usée vers le haut à l'intérieur du tuyau ascendant soit généré et que de l'air provenant de l'espace de tête du réacteur soit introduit par tourbillonnement au dessus du tuyau ascendant dans le flux en boucle.

16. Procédé selon une des revendications 13 à 15, **caractérisé en ce que** le fonctionnement du dispositif de transport est activé et désactivé par périodes.

17. Procédé selon la revendication 16, **caractérisé en ce que** le fonctionnement du dispositif de transport est activé et désactivé de manière régulée, la concentration en oxygène à une position de la partie inférieure du réacteur servant de préférence de grandeur de réglage.

18. Procédé selon une des revendications 13 à 17, **caractérisé en ce que** le fonctionnement du dispositif de transport est réglé en fonction de la conception au niveau construction du réacteur de manière à ce que l'eau usée sortant du réacteur présente un faible excédent ou pas d'excédent d'oxygène, de préférence moins de 1,0 mg/l d'O₂.

19. Procédé selon une des revendications 13 à 18, **caractérisé en ce que** le fonctionnement du dispositif de transport est réglé de manière à ce que l'écoulement d'eau dans la chambre de la petite station d'épuration où est mis en oeuvre le réacteur soit assez faible pour qu'une sédimentation de particules ait lieu dans cette chambre.

20. Station d'épuration à chambres multiples comprenant au moins deux chambres, **caractérisée en ce que**, dans la deuxième, la troisième ou la quatrième chambre, est disposé un réacteur selon une des revendications 1 à 12.
